# EUROPEAN PATENT APPLICATION

(11) **EP 4 431 991 A1**
(43) Date of publication of application: **18.09.2024**
(21) Application number: 22903014.3
(22) Date of filing: 17.10.2022
(51) Int. Cl.: G02B 6/38, G02B 6/42

(54) **OPTICAL MODULE, FERRULE AND OPTICAL FIBER CONNECTOR**

(30) Priority: 09.12.2021 CN 202111497530
(71) Applicant: Huawei Technologies Co., Ltd., Shenzhen, Guangdong 518129 (CN)
(72) Inventor: HUANG, Xinhua, Shenzhen, Guangdong 518129 (CN); LAN, Peng, Shenzhen, Guangdong 518129 (CN); FENG, Jia, Shenzhen, Guangdong 518129 (CN); LI, Huiping, Shenzhen, Guangdong 518129 (CN)
(74) Representative: Isarpatent
(86) International application number: PCT/CN2022/125686
(87) International publication number: WO 2023/103590

(57) **Abstract**

Embodiments of this application provide an optical module, a ferrule, and an optical fiber connector, so that a plurality of optical signals can be transmitted through one optical interface, and the optical module is enabled to meet a requirement for system capacity expansion. The optical module includes N optical units, a demultiplexing unit, and an optical fiber connector. The optical fiber connector includes a ferrule and M optical fibers. The M optical fibers are disposed in the ferrule, each of the M optical fibers corresponds to at least one of the N optical units, and optical units corresponding to any two of the M optical fibers are different, where M is an integer greater than or equal to 2, and N is an integer greater than or equal to M. A first optical fiber is configured to transmit an optical signal received by an optical unit corresponding to the first optical fiber, and/or configured to transmit an optical signal received from the optical unit corresponding to the first optical fiber, where the first optical fiber is any one of the M optical fibers.

## Description

This application claims priority to Chinese Patent Application No. 202111497530.8, filed with the China National Intellectual Property Administration on December 09, 2021 and entitled "OPTICAL MODULE, FERRULE, AND OPTICAL FIBER CONNECTOR", which is incorporated herein by reference in its entirety.

### TECHNICAL FIELD

Embodiments of this application relate to the field of optical communication technologies, and more specifically, to an optical module, a ferrule, and an optical fiber connector.

### BACKGROUND

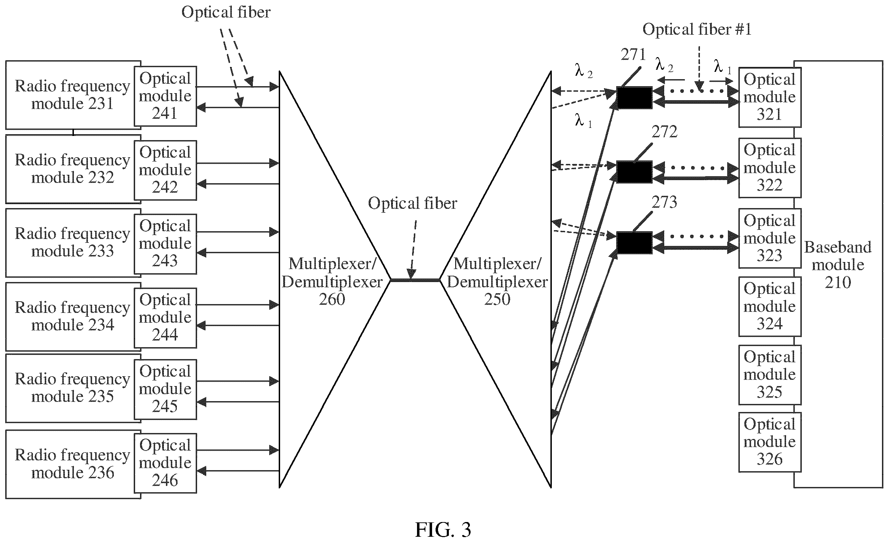

With advancement of an informatization progress and an increasing requirement of a network application, compared with a conventional two-fiber bidirectional optical module, a single-fiber bidirectional optical module is widely used in a communication network because the single-fiber bidirectional optical module can be used to save an optical fiber resource and increase a communication system capacity. As shown in FIG. 3, when the single-fiber bidirectional optical module is used in communication between a baseband unit (baseband unit, BBU) and an active antenna unit (active antenna unit, AAU), a multiplexer/demultiplexer may receive and send optical signals through an optical fiber #1 at the same time, and this causes a conflict. Therefore, the single-fiber bidirectional optical module cannot be applicable to a scenario in which the single-fiber bidirectional optical module is directly connected to the multiplexer/demultiplexer. In addition, when a larger capacity needs to be expanded with the development of a communication system, the single-fiber bidirectional optical module may fail to meet a requirement for capacity expansion.

### SUMMARY

Embodiments of this application provide an optical module, a ferrule, and an optical fiber connector, so that a plurality of optical signals can be transmitted through one optical interface, and the optical module is enabled to meet a requirement for system capacity expansion.

According to a first aspect, an optical module is provided. The optical module includes N optical units, a demultiplexing unit, and an optical fiber connector, where the optical fiber connector includes a ferrule and M optical fibers, the M optical fibers are disposed in the ferrule, each of the M optical fibers corresponds to at least one of the N optical units, and optical units corresponding to any two of the M optical fibers are different, where M is an integer greater than or equal to 2, and N is an integer greater than or equal to M. A first optical unit in the N optical units is configured to receive or send an optical signal, and the first optical unit is any one of the N optical units. A first optical fiber in the M optical fibers is configured to transmit an optical signal received by an optical unit corresponding to the first optical fiber, and/or the first optical fiber is configured to transmit an optical signal received from the optical unit corresponding to the first optical fiber, where the first optical fiber is any one of the M optical fibers. The demultiplexing unit is configured to send, to the first optical unit, an optical signal received from an optical fiber corresponding to the first optical unit, and/or configured to send, to the first optical fiber, the optical signal received from the optical unit corresponding to the first optical fiber.

Based on the foregoing optical module, two or more optical fibers are built in the ferrule included in the optical fiber connector. Compared with an existing solution in which a ferrule in an optical fiber connector includes only one optical fiber, in this solution, more optical signals can be transmitted by using one optical module, to meet a requirement for system capacity expansion. For example, if the optical module includes three optical units, and two optical fibers are built in the ferrule, one of the optical fibers corresponds to one optical unit, to be specific, is configured to transmit an optical signal with one wavelength, and the other optical fiber corresponds to the other two optical units, to be specific, is configured to transmit optical signals with two wavelengths. In this case, the optical module is configured to transmit three optical signals in total. Compared with an existing single-fiber bidirectional optical module, the optical module provided in this application can transmit more optical signals. If the optical module is deployed on a baseband module, and the three optical units included in the optical module respectively communicate with three radio frequency modules, the baseband module may communicate with the three radio frequency modules by using the optical module, while the baseband module can only communicate with a maximum of two radio frequency modules by using the single-fiber bidirectional optical module. Therefore, when the optical module is deployed on the baseband module, the baseband module may communicate with more radio frequency devices without increasing a quantity of optical modules, to meet the requirement for system capacity expansion. In addition, because the quantity of optical modules does not need to be increased, a panel size of the baseband module may also remain unchanged.

It should be noted that, the optical fiber connector is connected to another unit included in the optical module through spatial light instead of the optical fiber in the ferrule.

With reference to the first aspect, in some implementations of the first aspect, wavelengths of optical signals corresponding to any two of the N optical units are different.

Based on the foregoing optical module, when wavelengths of optical signals transmitted by all optical units are different, if each optical fiber built in the ferrule corresponds to one of the N optical units, when the optical module provided in this application is connected to an existing multiplexer/demultiplexer, a case in which the multiplexer/demultiplexer receives and sends optical signals through a same optical fiber at the same time does not occur. Therefore, an additional multiplexer/demultiplexer does not need to be added between the optical module and the multiplexer/demultiplexer.

With reference to the first aspect, in some implementations of the first aspect, a length of the first optical fiber is equal to a length of the ferrule.

With reference to the first aspect, in some implementations of the first aspect, a length of the first optical fiber is greater than a length of the ferrule.

With reference to the first aspect, in some implementations of the first aspect, the N optical units include a first optical receiving unit and a first optical sending unit, and the M optical fibers include a second optical fiber and a third optical fiber. The second optical fiber is configured to transmit a first optical signal received by the first optical receiving unit. The third optical fiber is configured to transmit a second optical signal received from the first optical sending unit.

Based on the foregoing optical module, because two optical fibers are in one ferrule, optical signals can be received and sent through different optical fibers without adding an optical interface. Compared with the single-fiber bidirectional optical module that receives and sends optical signals through one optical fiber, the optical module provided in this application may be directly connected to the existing multiplexer/demultiplexer.

With reference to the first aspect, in some implementations of the first aspect, the demultiplexing unit includes a first filter and a second filter. The first filter is configured to: reflect the first optical signal and transmit the second optical signal. The second filter is configured to reflect the second optical signal.

With reference to the first aspect, in some implementations of the first aspect, the N optical units further include a second optical receiving unit and a second optical sending unit, and the M optical fibers further include a fourth optical fiber and a fifth optical fiber. The fourth optical fiber is configured to transmit a third optical signal received by the second optical receiving unit. The fifth optical fiber is configured to transmit a fourth optical signal received from the second optical sending unit.

With reference to the first aspect, in some implementations of the first aspect, the N optical units further include a second optical receiving unit and a second optical sending unit, and the M optical fibers further include a sixth optical fiber. The sixth optical fiber is configured to transmit a fourth optical signal received from the second optical sending unit. The sixth optical fiber is further configured to transmit a third optical signal received by the second optical receiving unit.

With reference to the first aspect, in some implementations of the first aspect, the demultiplexing unit includes a first filter, a second filter, a third filter, and a fourth filter. The first filter is configured to: reflect the first optical signal and transmit another optical signal. The second filter is configured to: reflect the second optical signal and transmit another optical signal. The third filter is configured to: reflect the third optical signal and transmit another optical signal. The fourth filter is configured to: transmit the fourth optical signal and reflect another optical signal.

With reference to the first aspect, in some implementations of the first aspect, the N optical fibers are arranged side by side in a same direction in the ferrule.

With reference to the first aspect, in some implementations of the first aspect, the N optical fibers are arranged around a longitudinal axis of the ferrule.

With reference to the first aspect, in some implementations of the first aspect, the N optical fibers include one or more multi-core optical fibers.

Optionally, each optical core in a single multi-core optical fiber is configured to transmit optical signals with different wavelengths.

According to a second aspect, a ferrule is provided. M optical fibers are built in the ferrule, and each of the M optical fibers is configured to transmit an optical signal with at least one wavelength, where M is an integer greater than or equal to 2.

Based on the foregoing ferrule, two or more optical fibers are built in the ferrule, and each optical fiber is configured to transmit the optical signal with at least one wavelength. Therefore, at least two optical signals can be transmitted by using one ferrule. If the ferrule is used in an optical module, the at least two optical signals can be transmitted through one optical interface. This helps meet a requirement for system capacity expansion. For example, if three optical fibers are built in the ferrule, three optical signals may be transmitted by using one ferrule. When the optical module in which the ferrule is used is deployed on a baseband module, because the baseband module can transmit the three optical signals by using the optical module, the baseband module may communicate with a maximum of three radio frequency modules by using the three optical signals, while the baseband module can only communicate with a maximum of two radio frequency modules by using a single-fiber bidirectional optical module. Therefore, when the optical module in which the ferrule is used is deployed on the baseband module, the baseband module may communicate with more radio frequency devices without increasing a quantity of optical modules, to meet the requirement for system capacity expansion. In addition, because the quantity of optical modules does not need to be increased, a panel size of the baseband module may also remain unchanged.

With reference to the second aspect, in some implementations of the second aspect, wavelengths of optical signals transmitted by any two of the M optical fibers are different.

Based on the foregoing ferrule, when the wavelengths of the optical signals transmitted by any two optical fibers are different, if each of the M optical fibers transmits an optical signal with one wavelength, optical signals with different wavelengths may be transmitted through different optical fibers by using one ferrule. If the ferrule is used in the optical module, because each optical fiber of the optical module is configured to transmit optical signals with different wavelengths, when the optical module is connected to a multiplexer/demultiplexer, a case in which the multiplexer/demultiplexer receives and sends optical signals through one optical fiber at the same time does not occur. Therefore, an additional multiplexer/demultiplexer does not need to be added between the optical module and the multiplexer/demultiplexer.

With reference to the second aspect, in some implementations of the second aspect, the M optical fibers include a second optical fiber and a third optical fiber. The second optical fiber is configured to transmit a first optical signal received by a first optical receiving unit. The third optical fiber is configured to transmit a second optical signal received from a first optical sending unit.

With reference to the second aspect, in some implementations of the second aspect, the M optical fibers further include a sixth optical fiber. The sixth optical fiber is configured to transmit a fourth optical signal received from a second optical sending unit. The sixth optical fiber is further configured to transmit a third optical signal received by a second optical receiving unit.

According to a third aspect, an optical fiber connector is provided. The optical fiber connector includes a ferrule, M optical fibers are built in the ferrule, and each of the M optical fibers is configured to transmit an optical signal with at least one wavelength, where M is an integer greater than or equal to 2.

Based on the foregoing optical fiber connector, because two or more optical fibers are built in the ferrule of the optical fiber connector, and each optical fiber is configured to transmit the optical signal with at least one wavelength, at least two optical signals can be transmitted by using one optical fiber connector. If the optical fiber connector is used in an optical module, the at least two optical signals can be transmitted through one optical interface. This helps meet a requirement for system capacity expansion. For example, if three optical fibers are built in the ferrule, three optical signals may be transmitted through one optical interface. When the optical module in which the optical fiber connector is used is deployed on a baseband module, because the baseband module can transmit three optical signals by using the optical module, the baseband module may communicate with a maximum of three radio frequency modules by using the three optical signals, while the baseband module can only communicate with a maximum of two radio frequency modules by using a single-fiber bidirectional optical module. Therefore, when the optical module in which the optical fiber connector is used is deployed on the baseband module, the baseband module may communicate with more radio frequency devices without increasing a quantity of optical modules, to meet the requirement for system capacity expansion. In addition, because the quantity of optical modules does not need to be increased, a panel size of the baseband module may also remain unchanged.

With reference to the third aspect, in some implementations of the third aspect, wavelengths of optical signals transmitted by any two of the M optical fibers are different.

Based on the foregoing optical fiber connector, when the wavelengths of the optical signals transmitted by any two optical fibers are different, if each of the M optical fibers is configured to transmit an optical signal with one wavelength, optical signals with different wavelengths may be transmitted through different optical fibers by using one optical fiber connector. If the optical fiber connector is used in the optical module, because each optical fiber of the optical module is configured to transmit optical signals with different wavelengths, when the optical module is connected to a multiplexer/demultiplexer, a case in which the multiplexer/demultiplexer receives and sends optical signals through one optical fiber at the same time does not occur. Therefore, an additional multiplexer/demultiplexer does not need to be added between the optical module and the multiplexer/demultiplexer.

With reference to the third aspect, in some implementations of the third aspect, the M optical fibers include a second optical fiber and a third optical fiber. The second optical fiber is configured to transmit a first optical signal received by a first optical receiving unit. The third optical fiber is configured to transmit a second optical signal received from a first optical sending unit.

With reference to the third aspect, in some implementations of the third aspect, the M optical fibers further include a sixth optical fiber. The sixth optical fiber is configured to transmit a fourth optical signal received from a second optical sending unit. The sixth optical fiber is further configured to transmit a third optical signal received by a second optical receiving unit.

According to a fourth aspect, an optical fiber transmission system is provided, and includes a radio frequency unit, a baseband unit, and the optical module according to any one of the first aspect or the implementations of the first aspect. The radio frequency unit communicates with the baseband unit by using the optical module.

With reference to the fourth aspect, in some implementations of the fourth aspect, the optical module is deployed on the baseband unit.

Because the optical module provided in this application can transmit more optical signals, when the optical module is deployed on the baseband unit, the baseband unit can transmit more optical signals by using the optical module without increasing a size of the baseband unit, so that the baseband unit can communicate with more radio frequency devices, to meet a requirement for system capacity expansion.

### BRIEF DESCRIPTION OF DRAWINGS

FIG. 1 is a schematic diagram of a structure of a radio access network device;
FIG. 2 is a schematic diagram of an optical fiber transmission system;
FIG. 3 is a schematic diagram of another optical fiber transmission system;
FIG. 4 is a schematic diagram of a structure of a ferrule according to an embodiment of this application;
FIG. 5 is a schematic diagram of a structure of an optical fiber connector according to an embodiment of this application;
FIG. 6 is a schematic diagram of a structure of an optical module according to an embodiment of this application;
FIG. 7 is a schematic diagram of a structure of an optical module according to another embodiment of this application;
FIG. 8 is a schematic diagram of a structure of an optical module according to another embodiment of this application;
FIG. 9 is a schematic diagram of a structure of an optical module according to another embodiment of this application; and
FIG. 10 is a schematic diagram of a structure of an optical module according to another embodiment of this application.

### DESCRIPTION OF EMBODIMENTS

The following describes technical solutions in embodiments of this application with reference to the accompanying drawings.

The technical solutions in embodiments of this application may be applied to various communication systems, for example, a 4th generation (4th generation, 4G) system like a long term evolution (long term evolution, LTE) system, a 5th generation (5th generation, 5G) system like a new radio (new radio, NR), and another communication system that may appear in the future.

In the foregoing communication system, a base station may communicate with one or more terminals. The base station may include one or more baseband modules, one or more radio frequency modules, and one or more antennas. The base station may communicate with the one or more terminals by using the one or more baseband modules, the one or more radio frequency modules, and the one or more antennas.

The baseband module may perform baseband processing on a signal, for example, process a digital signal or a baseband signal. The radio frequency module may perform radio frequency processing on the signal, for example, perform mutual conversion between the digital signal or the baseband signal and a radio frequency signal. The antenna may transmit or receive the radio frequency signal. For example, after processing the digital signal or the baseband signal, the baseband module sends the digital signal or the baseband signal to the radio frequency module, the radio frequency module may convert the digital signal or the baseband signal into the radio frequency signal, and the antenna transmits the radio frequency signal. Alternatively, the antenna sends the received radio frequency signal to the radio frequency module, the radio frequency module may convert the radio frequency signal into the digital signal or the baseband signal, and the baseband module processes the digital signal or the baseband signal.

Transmission between the baseband module and the radio frequency module may be referred to as fronthaul. One baseband module may include one or more fronthaul interfaces, and one radio frequency module may include one or more fronthaul interfaces. The one or more fronthaul interfaces on the baseband module may be connected to the one or more fronthaul interfaces on the radio frequency module. Names such as fronthaul and the fronthaul interface are merely examples. It may be understood that transmission between the baseband module and the radio frequency module may have another name, and the interface on the baseband module or the radio frequency module may have another name. This is not limited in embodiments of this application.

The following uses 4G and 5G base stations as examples for description.

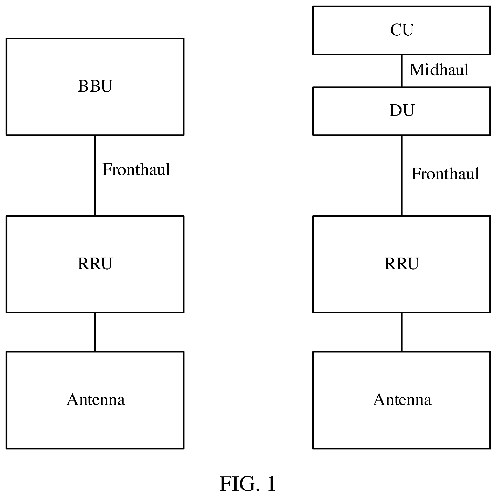

FIG. 1 is a schematic diagram of structures of 4G and 5G RAN base stations. Refer to FIG. 1. The 4G RAN base station may include a baseband unit (baseband unit, BBU), a remote radio unit (remote radio unit, RRU), and an antenna. The BBU is a baseband module, and the RRU is a radio frequency module. Transmission between the BBU and the RRU is referred to as fronthaul. The 5G RAN base station may include a central unit (central unit, CU), a distributed unit (distributed unit, DU), an RRU, and an antenna. The CU implements some functions of the base station, and the DU implements some functions of the base station. For example, the CU is responsible for processing a non-real-time protocol and service, and implements functions of a radio resource control (radio resource control, RRC) layer and a packet data convergence protocol (packet data convergence protocol, PDCP) layer. The DU is responsible for processing a physical layer protocol and a real-time service, and implements functions of a radio link control (radio link control, RLC) layer, a medium access control (medium access control, MAC) layer, and a physical (physical, PHY) layer. The DU is a baseband module, and the RRU is a radio frequency module. Transmission between the DU and the RRU is referred to as fronthaul, and transmission between the CU and the DU is referred to as midhaul. In an implementation, the RRU and the antenna may be implemented by an active antenna unit (active antenna unit, AAU). In this case, the AAU is a radio frequency module. Transmission between the BBU and the AAU or transmission between the DU and the RRU may be referred to as fronthaul.

One of core links of optical fiber communication is conversion between an optical signal and an electrical signal. During optical fiber communication, an optical signal carrying information is transmitted in an optical fiber, and information transmission with low costs and a low loss can be implemented by using a passive transmission feature of light in the optical fiber. However, an information processing device like a computer uses an electrical signal, and this requires mutual conversion between the electrical signal and the optical signal in a signal transmission process. An optical module implements the foregoing optical-to-electrical conversion function in the field of optical fiber communication technologies, and mutual conversion between the optical signal and the electrical signal is a core function of the optical module.

The optical module is a key component in an optical communication system. The optical module includes a transmitting end and a receiving end. The transmitting end mainly implements an optical transmission function through a laser, and the receiving end mainly implements an optical receiving function through a photodetector. Commonly used optical modules mainly include a two-fiber bidirectional optical module with a transmitting end and a receiving end that are separate, and a single-fiber bidirectional (Bidirectional, Bidi) optical module with a transmitting end and a receiving end that are combined. The optical module may be in a form of a pluggable optical interface. One optical interface has one ferrule, and one ferrule includes one optical fiber. The two-fiber bidirectional optical module has two optical interfaces. An optical fiber in a ferrule disposed in one of the optical interfaces is used by the transmitting end to output an optical signal, and an optical fiber in a ferrule disposed in the other optical interface is used by the receiving end to receive an optical signal. An optical fiber in a ferrule disposed in an optical interface of the single-fiber bidirectional optical module may be used by the transmitting end to output an optical signal, and may also be used by the receiving end to receive an optical signal.

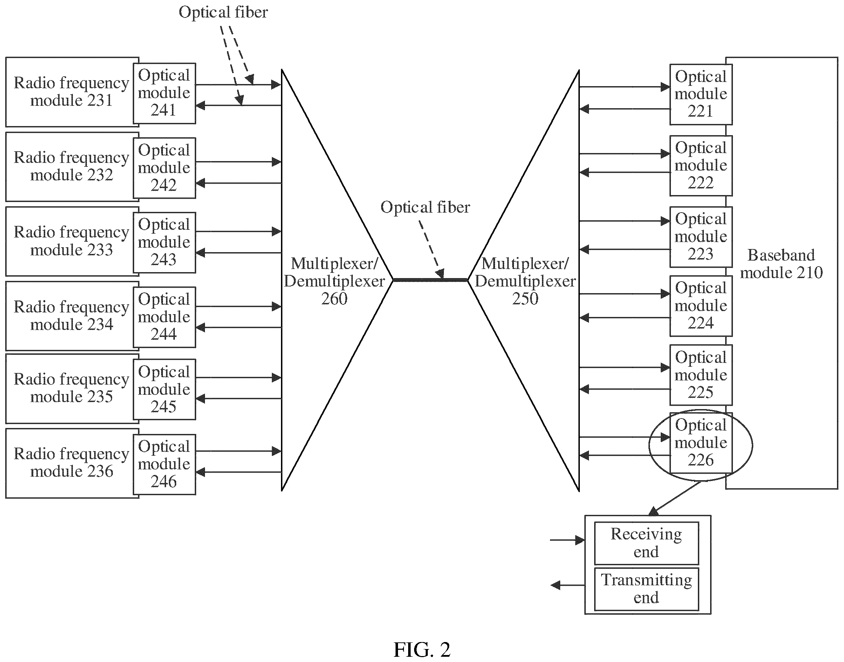

FIG. 2 is a schematic diagram of an optical fiber transmission system. As shown in FIG. 2, a baseband module 210 may be connected to a plurality of two-fiber bidirectional optical modules (221 to 226), a plurality of radio frequency modules (231 to 236) are respectively connected to two-fiber bidirectional optical modules (241 to 246). A multiplexer/demultiplexer 250 is disposed on a side of the baseband module 210, and a multiplexer/demultiplexer 260 may be disposed on a side of the radio frequency module. For example, as shown by the optical module 226 in FIG. 2, each optical module in FIG. 2 includes one transmitting end and one receiving end, and the transmitting end and the receiving end each are connected to one optical fiber. When the optical fiber transmission system works, transmitting ends in the plurality of two-fiber bidirectional optical modules (221 to 226) connected to the baseband module 210 may transmit signals to the multiplexer/demultiplexer 250 through optical fibers, and the multiplexer/demultiplexer 250 may combine a plurality of optical signals, and then transmit the plurality of optical signals to the multiplexer/demultiplexer 260 through one optical fiber. The multiplexer/demultiplexer 260 then splits the received optical signals based on wavelengths, and sends the optical signals to the plurality of two-fiber bidirectional optical modules (241 to 246) respectively. Similarly, the two-fiber bidirectional optical modules (241 to 246) connected to the radio frequency modules (231 to 236) may also send optical signals to the two-fiber bidirectional optical modules (221 to 216) connected to the baseband module 210.

When a system capacity is expanded, if a panel size of the current baseband module needs to remain unchanged, the two-fiber bidirectional optical module connected to the baseband module may be replaced with a single-fiber bidirectional optical module. Compared with the two-fiber bidirectional optical module that receives and sends optical signals through two optical fibers, the single-fiber bidirectional optical module receives and sends optical signals through one optical fiber. Therefore, when the baseband module communicates with a same quantity of radio frequency modules, a quantity of optical fibers can be decreased by using the single-fiber bidirectional optical module. As described above, one optical interface in the optical module has one ferrule, and one ferrule has one optical fiber. Therefore, a quantity of optical interfaces decreases as the quantity of optical fibers decreases. If the single-fiber bidirectional optical module on the baseband module is an optical module with two optical interfaces (for example, a dual small form-factor pluggable (dual small form-factor pluggable, DSFP) optical module), when the quantity of optical interfaces decreases, a quantity of optical modules used by the baseband module decreases. In other words, when a quantity of optical modules connected to the baseband module remains unchanged, the baseband module may communicate with more radio frequency modules by using the single-fiber bidirectional optical module, so that a requirement for capacity expansion can be met when the size of the baseband module remains unchanged.

As shown in FIG. 3, if a plurality of two-fiber bidirectional optical modules (221 to 226) connected to a baseband module 210 are replaced with a plurality of single-fiber bidirectional optical modules (321 to 326), it can be learned by comparing FIG. 2 with FIG. 3 that, when a quantity of radio frequency modules (231 to 236) communicating with the baseband module remains unchanged, a quantity of single-fiber bidirectional optical modules used by the baseband module is half of a quantity of two-fiber bidirectional optical modules in FIG. 2. In addition, the baseband module 210 may further communicate with other radio frequency modules (not shown in FIG. 3) by using other three single-fiber bidirectional optical modules (324 to 326). In other words, compared with the optical fiber transmission system shown in FIG. 2, an optical fiber transmission system shown in FIG. 3 may enable the baseband module 210 to communicate with more radio frequency devices when a panel size of the baseband module 210 remains unchanged.

As shown in FIG. 3, an optical fiber #1 of the optical module 321 is configured to receive an optical signal with a wavelength of λ1, and is also configured to send an optical signal with a wavelength of λ2. If an optical signal received by a multiplexer/demultiplexer 250 from a multiplexer/demultiplexer 260 includes the optical signal with a wavelength of λ1, and the optical module 321 sends the optical signal with a wavelength of λ2 through the optical fiber #1, the multiplexer/demultiplexer 250 cannot receive the optical signal with a wavelength of λ2 from the optical module 321 through the optical fiber #1, and cannot send the optical signal with a wavelength of λ1 to the optical module 321 through the optical fiber #1. Therefore, in the optical fiber transmission system shown in FIG. 3, to reuse the existing multiplexer/demultiplexer (250), a multiplexer/demultiplexer 271 and a multiplexer/demultiplexer 272 need to be additionally added on a side of the baseband module. The multiplexer/demultiplexer 271 receives the optical signal with a wavelength of λ1 from the multiplexer/demultiplexer 250 through one optical fiber, and sends the optical signal with a wavelength of λ1 to the optical module 321 through the optical fiber #1. The multiplexer/demultiplexer 251 is further configured to: receive the optical signal with a wavelength of λ2 from the optical module 321 through the optical fiber #1, and send the optical signal with a wavelength of λ2 to the multiplexer/demultiplexer 250 through another optical fiber. The multiplexer/demultiplexer 272 and the multiplexer/demultiplexer 273 have similar functions.

However, based on the optical fiber transmission system shown in FIG. 3, additionally adding the multiplexer/demultiplexer 271 and the multiplexer/demultiplexer 272 to the optical fiber transmission system increases complexity of the optical fiber transmission system. In addition, when a larger capacity needs to be expanded with the development of the system, a single-fiber bidirectional optical module may fail to meet a requirement for capacity expansion.

In view of this, embodiments of this application provide a ferrule, an optical fiber connector, and an optical module, to expect to transmit a plurality of optical signals through one optical interface, so that the optical module meets the requirement for capacity expansion.

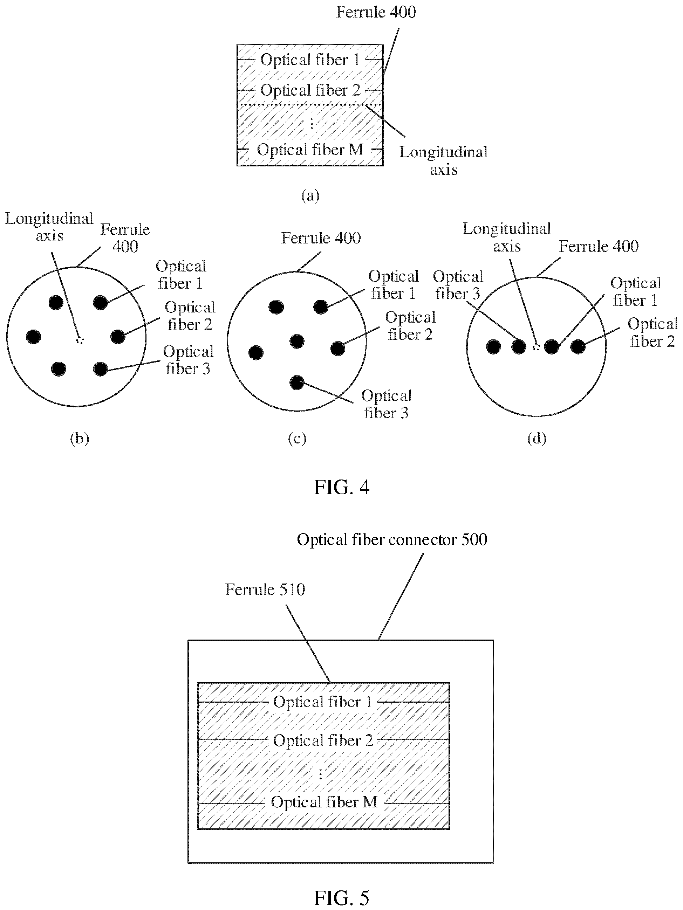

FIG. 4 is a schematic diagram of a structure of a ferrule according to an embodiment of this application. In a longitudinal cross-sectional view of the ferrule shown in (a) in FIG. 4, M optical fibers are built in the ferrule 400. To be specific, the M optical fibers are an optical fiber 1 to an optical fiber M. M is an integer greater than or equal to 2. The optical fiber 1 to the optical fiber M each are configured to transmit an optical signal with at least one wavelength, to be specific, a first optical fiber in the optical fiber 1 to the optical fiber M is configured to transmit an optical signal with one wavelength, or the first optical fiber is configured to transmit optical signals with a plurality of wavelengths, and the first optical fiber is any one of the optical fiber 1 to the optical fiber M.

Optionally, wavelengths of optical signals transmitted by any two of the optical fiber 1 to the optical fiber M are different. For example, if the optical fiber 1 is configured to transmit an optical signal 1, the optical fiber 2 is configured to transmit an optical signal 2, ..., and the optical fiber M is configured to transmit an optical signal M, wavelengths of any two of the optical signal 1 to the optical signal M are different.

In the ferrule provided in this embodiment of this application, because two or more optical fibers are built in the ferrule, and each optical fiber is configured to transmit the optical signal with at least one wavelength, at least two optical signals can be transmitted by using one ferrule. If the ferrule is used in an optical module, the at least two optical signals can be transmitted through one optical interface. This helps meet a requirement for system capacity expansion. In addition, because at least two optical fibers are built in the ferrule provided in this embodiment of this application, compared with an existing solution in which one optical fiber is built in a ferrule, when quantities of wavelengths of optical signals transmitted by all optical fibers are the same, in this solution, the ferrule provided in this embodiment of this application may be used to transmit more optical signals with different wavelengths. For example, if three optical fibers are built in the ferrule, three optical signals may be transmitted by using one ferrule. When the optical module in which the ferrule is used is deployed on a baseband module, because the baseband module can transmit the three optical signals by using the optical module, the baseband module may communicate with a maximum of three radio frequency modules by using the three optical signals, while the baseband module can only communicate with a maximum of two radio frequency modules by using a single-fiber bidirectional optical module. Therefore, when the optical module in which the ferrule is used is deployed on the baseband module, the baseband module may communicate with more radio frequency devices without increasing a quantity of optical modules, to meet the requirement for system capacity expansion. If each of the three optical fibers built in the ferrule is configured to transmit a plurality of optical signals with different wavelengths, when the optical module in which the ferrule is used is deployed on the baseband module, the baseband module may communicate with more radio frequency modules. In addition, because the quantity of optical modules does not need to be increased, a panel size of the baseband module may also remain unchanged.

In addition, if each of the M optical fibers transmits an optical signal with one wavelength, and the wavelengths of the optical signals transmitted by any two optical fibers are different, optical signals with different wavelengths may be transmitted through different optical fibers by using one ferrule. If the ferrule is used in the optical module, because each optical fiber of the optical module is configured to transmit optical signals with different wavelengths, when the optical module is connected to a multiplexer/demultiplexer, a case in which the multiplexer/demultiplexer receives and sends optical signals through one optical fiber at the same time does not occur. Therefore, an additional multiplexer/demultiplexer does not need to be added between the optical module and the multiplexer/demultiplexer. For example, if the optical module in which the ferrule provided in this embodiment of this application is used is deployed on the baseband module 210 shown in FIG. 3, the optical module may be directly connected to the multiplexer/demultiplexer 250, and does not need to be connected to the multiplexer/demultiplexer 250 by using the additional multiplexers/demultiplexers (271 to 273), to reduce complexity of the optical fiber transmission system.

It should be understood that locations and a relative relationship of the M optical fibers in the ferrule are not limited in this embodiment of this application.

In a possible implementation, the M optical fibers are arranged around a longitudinal axis of the ferrule. For example, when the M optical fibers are arranged around the longitudinal axis of the ferrule, a transverse cross-sectional view of the ferrule is shown in (b) in FIG. 4.

In another possible implementation, one of the M optical fibers is located at a longitudinal axis of the ferrule, and remaining optical fibers are arranged around the longitudinal axis of the ferrule. For example, when one of the M optical fibers is located at the longitudinal axis of the ferrule, and the remaining optical fibers are arranged around the longitudinal axis of the ferrule, a transverse cross-sectional view of the ferrule is shown in (c) in FIG. 4.

In another possible implementation, the M optical fibers are arranged side by side in a same direction in the ferrule. For example, when the M optical fibers are arranged side by side in the ferrule in a direction parallel to a longitudinal axis of the ferrule, a transverse cross-sectional view of the ferrule is shown in (d) in FIG. 4.

It should be noted that, N=6 or N=4 is merely used as an example in (b) in FIG. 4 to (d) in FIG. 4.

Optionally, distances between different optical fibers of the M optical fibers and the longitudinal axis of the ferrule may be equal or not equal. As shown in (b) of FIG. 4, a distance between the optical fiber 1 and the longitudinal axis of the ferrule may be equal to a distance between the optical fiber 2 and the longitudinal axis of the ferrule; or a distance between the optical fiber 1 and the longitudinal axis of the ferrule may not be equal to a distance between the optical fiber 2 and the longitudinal axis of the ferrule.

Optionally, a distance between two adjacent optical fibers of the M optical fibers may be equal or not equal. As shown in (d) in FIG. 4, a distance between the optical fiber 1 and the optical fiber 2 may be equal to a distance between the optical fiber 2 and the optical fiber 3; or a distance between the optical fiber 1 and the optical fiber 2 may not be equal to a distance between the optical fiber 2 and the optical fiber 3.

It should be further understood that a type of the optical fiber is not limited in this embodiment of this application. For example, the M optical fibers may include a single-core optical fiber, a multi-core optical fiber (multi-core optical fiber, MCF), a single-mode optical fiber, a few-mode optical fiber, a single-core few-mode optical fiber, and a multi-core few-mode optical fiber. In addition, types of all of the M optical fibers may be the same, or types of different optical fibers of the M optical fibers may be different. This is not limited in this embodiment of this application.

Optionally, the M optical fibers include one or more multi-core optical fibers, and each optical core in a single multi-core optical fiber may be configured to transmit optical signals with different wavelengths. It may be understood that, when each optical core in the single multi-core optical fiber can be configured to transmit the optical signals with different wavelengths, the single multi-core optical fiber may be configured to transmit optical signals with a plurality of wavelengths.

It should be further understood that a relationship between a length of the optical fiber and a length of the ferrule is not limited in this embodiment of this application. For example, a length of each of the M optical fibers is equal to the length of the ferrule. For another example, a length of each of the M optical fibers is greater than the length of the ferrule.

FIG. 5 is a longitudinal cross-sectional view of an optical fiber connector according to an embodiment of this application. As shown in FIG. 5, the optical fiber connector 500 includes a ferrule 510, and M optical fibers are built in the ferrule 510. To be specific, the M optical fibers are an optical fiber 1 to an optical fiber M. Each of the optical fiber 1 to the optical fiber M is configured to transmit an optical signal with at least one wavelength.

Optionally, wavelengths of optical signals transmitted by any two of the optical fiber 1 to the optical fiber M are different. For example, if the optical fiber 1 is configured to transmit an optical signal 1, the optical fiber 2 is configured to transmit an optical signal 2, ..., and the optical fiber M is configured to transmit an optical signal M, wavelengths of any two of the optical signal 1 to the optical signal M are different.

For more descriptions about the ferrule 510, refer to the foregoing descriptions of FIG. 4.

It should be noted that, the optical fiber connector 500 shown in FIG. 5 may further include another necessary module or unit. This is not limited in this embodiment of this application.

According to the optical fiber connector provided in this embodiment of this application, because at least two optical fibers are built in the ferrule of the optical fiber connector, and each optical fiber can be configured to transmit the optical signal with at least one wavelength, at least two optical signals can be transmitted by using one optical fiber connector. If the optical fiber connector is used in an optical module, the at least two optical signals can be transmitted through one optical interface. This helps meet a requirement for system capacity expansion. In addition, because the at least two optical fibers are built in the ferrule of the optical fiber connector, compared with an existing solution in which one optical fiber is built in a ferrule of an optical fiber connector, when quantities of wavelengths of optical signals transmitted by all optical fibers are the same, in this solution, the optical fiber connector provided in this embodiment of this application may be used to transmit more optical signals with different wavelengths. For example, if three optical fibers are built in the ferrule, three optical signals may be transmitted through one optical interface. When the optical module in which the optical fiber connector is used is deployed on a baseband module, because the baseband module can transmit the three optical signals by using the optical module, the baseband module may communicate with a maximum of three radio frequency modules by using the three optical signals, while the baseband module can only communicate with a maximum of two radio frequency modules by using a single-fiber bidirectional optical module. Therefore, when the optical module in which the optical fiber connector is used is deployed on the baseband module, the baseband module may communicate with more radio frequency devices without increasing a quantity of optical modules, to meet the requirement for system capacity expansion. If each of the three optical fibers built in the ferrule of the optical fiber connector is configured to transmit a plurality of optical signals with different wavelengths, when the optical module in which the optical fiber connector is used is deployed on the baseband module, the baseband module may communicate with more radio frequency modules. In addition, because the quantity of optical modules does not need to be increased, a panel size of the baseband module may also remain unchanged.

In addition, if each of the M optical fibers is configured to transmit an optical signal with one wavelength, and the wavelengths of the optical signals transmitted by any two optical fibers are different, optical signals with different wavelengths may be transmitted through different optical fibers by using one optical fiber connector. If the optical fiber connector is used in the optical module, because each optical fiber of the optical module is configured to transmit optical signals with different wavelengths, when the optical module is connected to a multiplexer/demultiplexer, a case in which the multiplexer/demultiplexer receives and sends optical signals through one optical fiber at the same time does not occur. Therefore, an additional multiplexer/demultiplexer does not need to be added between the optical module and the multiplexer/demultiplexer. For example, if the optical module in which the optical fiber connector provided in this embodiment of this application is used is deployed on the baseband module 210 shown in FIG. 3, the optical module may be directly connected to the multiplexer/demultiplexer 250, and does not need to be connected to the multiplexer/demultiplexer 250 by using the additional multiplexers/demultiplexers (271 to 273), to reduce complexity of the optical fiber transmission system.

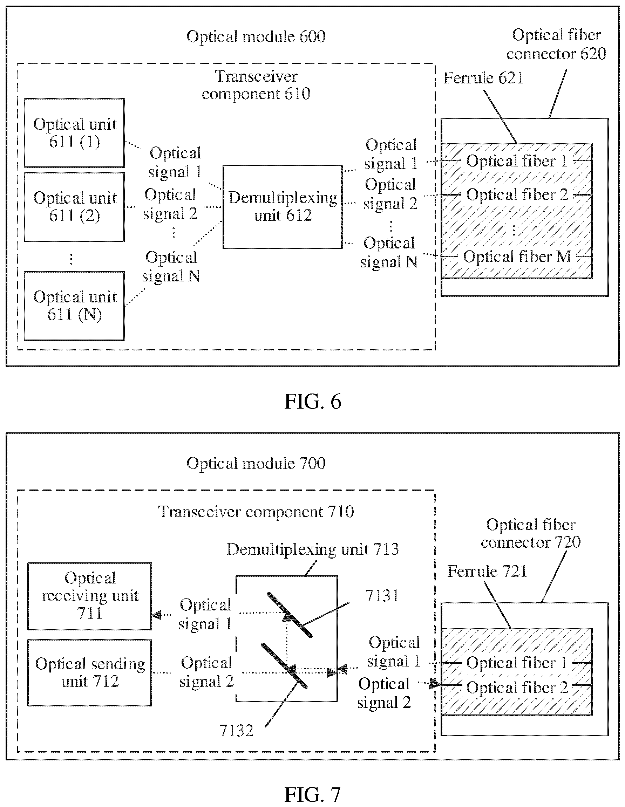

FIG. 6 is a schematic diagram of a structure of an optical module according to an embodiment of this application. As shown in FIG. 6, the optical module 600 includes N optical units: an optical unit 611 (1) to an optical unit 611 (N). A first optical unit in the N optical units is configured to receive or send an optical signal, and the first optical unit is any one of the N optical units.

The optical module 600 further includes a demultiplexing unit 612 and an optical fiber connector 620. The optical fiber connector 620 includes a ferrule 621, and M optical fibers are built in the ferrule 621. To be specific, the M optical fibers are an optical fiber 1 to an optical fiber M. N is an integer greater than or equal to M. For descriptions of the optical fiber connector 620, refer to the descriptions in FIG. 5. For descriptions about the ferrule 621, refer to the descriptions in FIG. 4.

Each optical fiber disposed in the optical module 600 corresponds to at least one of the N optical units, and optical units corresponding to any two of the M optical fibers are different. Specifically, a quantity of optical units corresponding to a first optical fiber in the M optical fibers is equal to a quantity of wavelengths of optical signals transmitted by the first optical fiber, and the first optical fiber is any one of the M optical fibers. For example, if the first optical fiber is configured to transmit optical signals with L different wavelengths, the first optical fiber corresponds to L optical units, and each of the L optical units is configured to send or receive an optical signal with one wavelength. For example, the M optical fibers are in one-to-one correspondence with the N optical units. It may be understood that if the M optical fibers are in one-to-one correspondence with the N optical units, M=N. For another example, the M optical fibers include at least one optical fiber corresponding to a plurality of optical units. It may be understood that if the M optical fibers include the at least one optical fiber corresponding to the plurality of optical units, N>M.

Optionally, wavelengths of optical signals corresponding to any two of the N optical units are different. The optical signal corresponding to the optical unit is an optical signal that can be correctly processed by the optical unit. For example, the optical signal corresponding to the optical unit is an optical signal that the optical unit supports to send, or an optical signal that the optical unit supports to receive. As shown in FIG. 6, the optical unit 611 (1) is configured to send or receive an optical signal 1, the optical unit 611 (2) is configured to send or receive an optical signal 2, ..., and the optical unit 611 (N) is configured to send or receive an optical signal N. Wavelengths of any two of the optical signal 1 to the optical signal N are different. n=1, 2, ..., N. It may be understood that when the wavelengths of the optical signals corresponding to any two of the N optical units are different, because the optical units corresponding to any two of the M optical fibers are different, wavelengths of optical signals transmitted by any two of the M optical fibers are different.

Optionally, wavelengths of optical signals corresponding to different optical units in the N optical units may alternatively be the same.

The first optical fiber in the M optical fibers is configured to transmit an optical signal received by the optical unit corresponding to the first optical fiber, and/or the first optical fiber is configured to transmit an optical signal received from the optical unit corresponding to the first optical fiber. As shown in FIG. 6, it is assumed that the optical fiber 1 corresponds to the optical unit 611 (1). If the optical unit 611 (1) is a sending module, the optical fiber 1 is configured to transmit the optical signal 1 received from the optical unit 611 (1). If the optical unit 611 (1) is a receiving module, the optical fiber 1 is configured to transmit the optical signal 1 received by the optical unit 611 (1).

The demultiplexing unit 612 is configured to send, to the first optical unit, an optical signal received from an optical fiber corresponding to the first optical unit, and/or configured to send, to the first optical fiber, the optical signal received from the optical unit corresponding to the first optical fiber. As shown in FIG. 6, it is assumed that the optical fiber 2 corresponds to the optical unit 611 (2) and the optical unit 611 (3). If the optical unit 611 (2) is a receiving module, the demultiplexing unit 612 is further configured to send, to the optical unit 611 (2), the optical signal 2 received from the optical fiber 2. If the optical unit 611 (3) is a sending module, the demultiplexing unit 612 is further configured to send, to the optical fiber 2, the optical signal 3 sent by the optical unit 611 (3).

For example, based on wavelengths of different optical signals, the demultiplexing unit 612 sends, to the first optical unit, the optical signal received from the optical fiber corresponding to the first optical unit, and/or sends, to the first optical fiber, the optical signal received from the optical unit corresponding to the first optical fiber. To be specific, the demultiplexing unit 612 selects, from the received optical signals, an optical signal with a wavelength corresponding to that of the first optical unit, and sends the optical signal to the first optical unit, and/or the demultiplexing unit 612 selects, from the received optical signals, an optical signal with a wavelength corresponding to that of the first optical unit, and sends the optical signal to the first optical fiber.

In a possible implementation, the optical unit 611 (1) to the optical unit 611 (N) and the demultiplexing unit 612 are encapsulated in a transceiver component 610.

It should be further noted that, the optical fiber connector 620 is connected to the optical module 600 including, for example, the demultiplexing unit 612 through spatial light instead of the optical fiber in the ferrule.

According to the optical module provided in this embodiment of this application, two or more optical fibers are built in the ferrule included in the optical fiber connector, and each optical fiber corresponds to a different optical unit. Compared with an existing solution in which a ferrule in an optical fiber connector includes only one optical fiber, in this solution, more optical signals can be transmitted by using one optical module, to meet a requirement for system capacity expansion. In addition, because at least two optical fibers are built in the ferrule of the optical module provided in this embodiment of this application, compared with an existing solution in which one optical fiber is built in a ferrule of an optical module, when quantities of wavelengths of optical signals transmitted by all optical fibers are the same, in this solution, the optical module provided in this embodiment of this application may be used to transmit more optical signals with different wavelengths. For example, if three optical fibers are built in the ferrule, and the three optical fibers respectively correspond to three optical units, three optical signals may be transmitted by using one optical module. When the optical module is deployed on a baseband module, if the three optical units respectively correspond to three radio frequency modules, the baseband module may communicate with three radio frequency devices by using the optical module, while the baseband module can only communicate with a maximum of two radio frequency modules by using a single-fiber bidirectional optical module. Therefore, when the optical module is deployed on the baseband module, the baseband module may communicate with more radio frequency devices without increasing a quantity of optical modules, to meet the requirement for system capacity expansion. If each of the three optical fibers built in the ferrule is configured to transmit a plurality of optical signals with different wavelengths, the optical module may include at least three optical units, and when the optical module is deployed on the baseband module, the baseband module may communicate with more radio frequency modules. In addition, because the quantity of optical modules does not need to be increased, a panel size of the baseband module may also remain unchanged.

In addition, if each optical fiber built in the ferrule is configured to transmit an optical signal with one wavelength, and different optical fibers transmit optical signals with different wavelengths, when the optical module is connected to a multiplexer/demultiplexer, a case in which the multiplexer/demultiplexer receives and sends optical signals through one optical fiber at the same time does not occur. Therefore, an additional multiplexer/demultiplexer does not need to be added between the optical module and the multiplexer/demultiplexer. For example, if the optical module in which the ferrule provided in this embodiment of this application is used is deployed on the baseband module 210 shown in FIG. 3, the optical module may be directly connected to the multiplexer/demultiplexer 250, and does not need to be connected to the multiplexer/demultiplexer 250 by using the additional multiplexers/demultiplexers (271 to 273), to reduce complexity of the optical fiber transmission system.

With reference to FIG. 7, the following uses the optical module shown in FIG. 6 as an example for description. In an embodiment shown in FIG. 7, an example in which both M and N are 2 is used to describe the optical module provided in this embodiment of this application.

As shown in FIG. 7, the optical module 700 includes an optical receiving unit 711 (namely, a first optical receiving unit), an optical sending unit 712 (namely, a first optical sending unit), a demultiplexing unit 713, and an optical fiber connector 720. The optical fiber connector 720 includes a ferrule 721, and an optical fiber 1 (namely, a second optical fiber) and an optical fiber 2 (namely, a third optical fiber) are built in the ferrule 721. The optical receiving unit 711 and the optical sending unit 712 respectively correspond to the optical unit 611 (1) and the optical unit 611 (2) in FIG. 6, the demultiplexing unit 713 corresponds to the demultiplexing unit 612 in FIG. 6, the optical fiber connector 720 corresponds to the optical fiber connector 620 in FIG. 6, the ferrule 721 corresponds to the ferrule 621 in FIG. 6, and the optical fiber 1 and the optical fiber 2 respectively correspond to the optical fiber 1 and the optical fiber 2 in FIG. 6.

The optical receiving unit 711 is configured to receive an optical signal 1 (namely, a first optical signal), and the optical fiber 1 is configured to transmit the optical signal 1 received by the optical receiving unit 711. The optical sending unit 712 is configured to send an optical signal 2 (namely, a second optical signal), and the optical fiber 2 is configured to transmit the optical signal 2 received from the optical sending unit 712. A wavelength of the optical signal 1 is different from a wavelength of the optical signal 2. It should be understood that the optical receiving unit 711 may be any component or structure that can implement optical signal receiving. For example, the optical receiving unit 711 may be an avalanche photon diode (avalanche photon diode, APD). The optical sending unit 712 may be any component or structure that can implement optical signal transmitting. For example, the optical sending unit 712 may be a laser.

The demultiplexing unit 713 is configured to: select the optical signal 2 and send the optical signal 2 to the optical fiber 2, and is configured to: select the optical signal 1 and send the optical signal 1 to the optical receiving unit 711.

For example, the demultiplexing unit 713 includes a filter (namely, a first filter) 7132 and a filter 7131 (namely, a second filter). The filter 7132 is configured to: reflect the optical signal 1 and transmit the optical signal 2, and the filter 7131 is configured to reflect the optical signal 2. When the optical sending unit 712 sends the optical signal 2, the filter 7132 sends, to the optical fiber 2, the optical signal 2 received from the optical sending unit 712. When receiving the optical signal 1 from the optical fiber 1, the reflector 7132 reflects the optical signal 1 to the filter 7131. Further, the filter 7131 reflects the optical signal 1 to the optical receiving unit 711.

In a possible implementation, the optical receiving unit 711, the optical sending unit 712, and the demultiplexing unit 713 are encapsulated in a transceiver component 710.

It should be noted that, an example in which the demultiplexing unit 713 includes the filter 7132 and the filter 7131 is merely used in FIG. 7. Embodiments of this application do not limit the demultiplexing unit 713 to necessarily include the filter 7132 and the filter 7131.

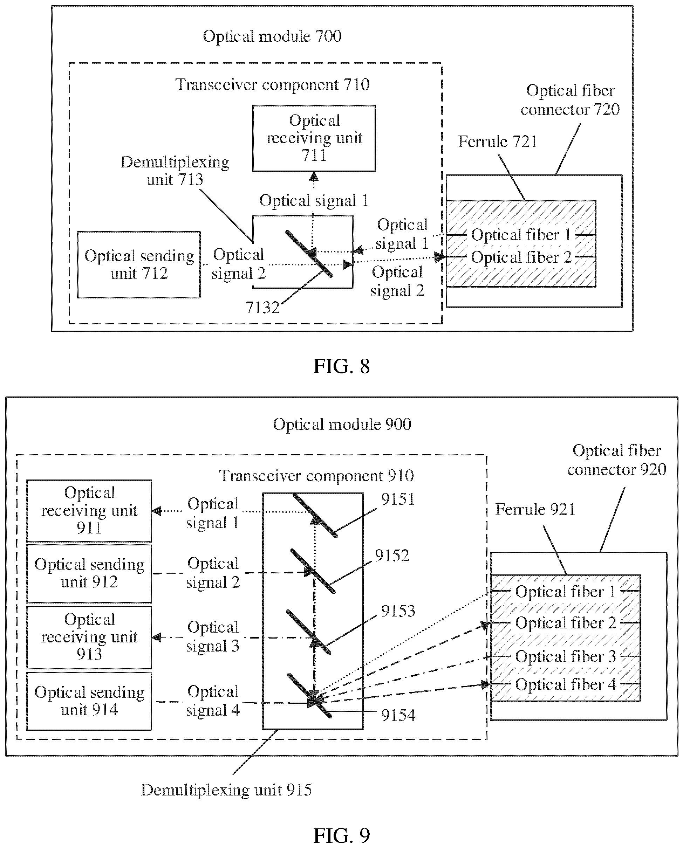

As shown in FIG. 8, the demultiplexing unit 713 includes only the filter 7132, and may also select the optical signal 2 and send the optical signal 2 to the optical fiber 2, and may select the optical signal 1 and send the optical signal 1 to the optical receiving unit 711.

It should be further noted that, the filter 7132 may be replaced with any other component that can be configured to transmit the optical signal 2 and reflect the optical signal 1, and the filter 7131 may also be replaced with any other component that can be configured to reflect the optical signal 1.

It should be further noted that, an example in which two optical units included in the optical module 700 are respectively configured to receive the optical signal 1 and send the optical signal 2 is used in FIG. 7, and the two optical units included in the optical module 700 may be respectively configured to receive the optical signal 1 and receive the optical signal 2, or may be respectively configured to send the optical signal 1 and send the optical signal 2. Correspondingly, when both the two optical units included in the optical module 600 are configured to send the optical signals, both the two optical fibers included in the optical module 700 are also configured to transmit the optical signals sent by the optical units, and the demultiplexing unit is configured to send, to an optical fiber corresponding to each optical unit, an optical signal sent by the optical unit. Alternatively, when both the two optical units included in the optical module 700 are configured to receive the optical signals, both the two optical fibers included in the optical module 700 are also configured to transmit the optical signals received by the optical units, and the demultiplexing unit is configured to send, to an optical unit corresponding to each optical fiber, an optical signal received by the optical fiber.

It should be further noted that, an example in which the wavelength of the optical signal 1 is different from the wavelength of the optical signal 2 is used in FIG. 7. The wavelength of the optical signal 1 may be the same as the wavelength of the optical signal 2.

With reference to FIG. 9, the following uses the optical module shown in FIG. 6 as an example for description. In an embodiment shown in FIG. 9, an example in which both M and N are 4 is used to describe the optical module provided in this embodiment of this application.

As shown in FIG. 9, the optical module 900 includes an optical receiving unit 911 (which is the same as the optical receiving unit 711 in FIG. 7), an optical sending unit 912 (which is the same as the optical sending unit 712 in FIG. 7), an optical receiving unit 913 (namely, a second optical receiving unit), an optical sending unit 914 (namely, a second optical sending unit), a demultiplexing unit 915, and an optical fiber connector 920. The optical fiber connector 920 includes a ferrule 921, and an optical fiber 1 (which is the same as the optical fiber 1 in FIG. 7), an optical fiber 2 (which is the same as the optical fiber 2 in FIG. 7), an optical fiber 3 (namely, a fourth optical fiber), and an optical fiber 4 (namely, a fifth optical fiber) are built in the ferrule 921. The optical receiving unit 913 and the optical sending unit 914 respectively correspond to the optical unit 611 (3) and the optical unit 611 (4) in FIG. 6, the demultiplexing unit 915 corresponds to the demultiplexing unit 612 in FIG. 6, the optical fiber connector 920 corresponds to the optical fiber connector 920 in FIG. 6, the ferrule 921 corresponds to the ferrule 621 in FIG. 6, and the optical fiber 3 and the optical fiber 4 respectively correspond to the optical fiber 3 and the optical fiber 4 in FIG. 6.

For functions of the optical receiving unit 911, the optical sending unit 912, the optical fiber 1, and the optical fiber 2, refer to the descriptions in FIG. 7.

The optical receiving unit 913 is configured to receive an optical signal 3 (namely, a third optical signal), and the optical fiber 3 is configured to transmit the optical signal 3 received by the optical receiving unit 913. The optical sending unit 914 is configured to send an optical signal 4 (namely, a fourth optical signal), and the optical fiber 4 is configured to transmit the optical signal 4 received from the optical sending unit 914. Wavelengths of any two of an optical signal 1 to the optical signal 4 are different. It should be understood that the optical receiving unit 913 may be any component or structure that can implement optical signal receiving. For example, the optical receiving unit 913 may be an APD. The optical sending unit 914 may be any component or structure that can implement optical signal transmitting. For example, the optical sending unit 914 may be a laser.

The demultiplexing unit 915 is configured to: select the optical signal 2 and send the optical signal 2 to the optical fiber 2, is configured to: select the optical signal 1 and send the optical signal 1 to the optical receiving unit 911, is configured to: select the optical signal 4 and send the optical signal 4 to the optical fiber 4, and is configured to: select the optical signal 3 and send the optical signal 3 to the optical receiving unit 913.

For example, the demultiplexing unit 915 includes a filter 9151 (namely, a first filter), a filter 9152 (namely, a second filter), a filter 9153 (namely, a third filter), and a filter 9154 (namely, a fourth filter). The filter 9151 is configured to: reflect the optical signal 1 and transmit another optical signal. The filter 9152 is configured to: reflect the optical signal 2 and transmit another optical signal. The filter 9153 is configured to: reflect the optical signal 3 and transmit another optical signal. The filter 9154 is configured to: transmit the optical signal 4 and reflect another optical signal. When the filter 9154 receives the optical signal 1 from the optical fiber 1, the filter 9154 reflects the optical signal 1. Further, the optical signal 1 reaches the filter 9151 through the filter 9153 and the filter 9152, and then the filter 9151 reflects the optical signal 1 to the optical receiving unit 911. When the optical sending unit 912 sends the optical signal 2, the filter 9152 reflects the optical signal 2 sent by the optical sending unit 912. The optical signal 2 reaches the filter 9154 through the filter 9153, and then the reflector 9154 reflects the optical signal 2 to the optical fiber 2. When the filter 9154 receives the optical signal 3 from the optical fiber 3, the filter 9154 reflects the optical signal 3 to the filter 9153, and then the filter 9153 reflects the optical signal 3 to the optical receiving unit 913. When the optical sending unit 914 sends the optical signal 4, the optical signal 4 reaches the optical fiber 4 through the filter 9154.

In a possible implementation, the optical receiving unit 911, the optical sending unit 912, the optical sending unit 913, the optical receiving unit 914, and the demultiplexing unit 915 are encapsulated in a transceiver component 910.

It should be noted that, an example in which the demultiplexing unit 915 includes the filter 9151, the filter 9152, the filter 9153, and the filter 9154 is merely used in FIG. 9. Embodiments of this application do not limit the demultiplexing unit 915 to necessarily include the foregoing elements. Provided that the demultiplexing unit can select the optical signal 1 and send the optical signal 1 to the optical receiving unit 911, can select the optical signal 2 and send the optical signal 2 to the optical fiber 2, can select the optical signal 3 and send the optical signal 3 to the optical receiving unit 913, and can select the optical signal 4 and send the optical signal 4 to the optical fiber 4, the demultiplexing unit falls within the protection scope of embodiments of this application.

It should be further noted that, an example in which the four optical units included in the optical module 900 include two optical receiving units and two optical sending units is merely used in FIG. 9. The four optical units included in the optical module 900 may include more optical receiving units or include more optical sending units. This is not limited in embodiments of this application. It may be understood that when a function of the optical unit changes, a function of an optical fiber corresponding to the optical unit also changes, and a function of the demultiplexing unit also changes. For example, if the optical receiving unit 911 included in the optical module 900 is replaced with the optical sending unit 911 configured to send the optical signal 1, the optical fiber 1 is configured to transmit the optical signal 1 sent by the optical sending unit 911, and the demultiplexing unit 915 selects the optical signal 1 and sends the optical signal 1 to the optical fiber 1.

It should be further noted that, an example in which wavelengths of any two of the optical signal 1 to the optical signal 4 are different is used in FIG. 9. Wavelengths of different optical signals in the optical signal 1 to the optical signal 4 may be the same.

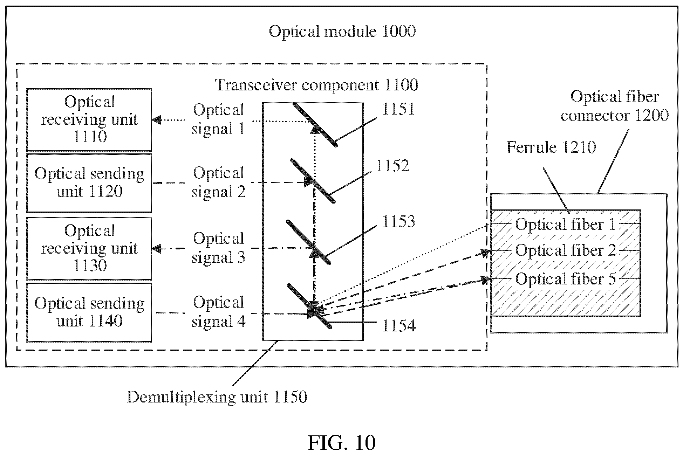

With reference to FIG. 10, the following uses the optical module shown in FIG. 6 as an example for description. In an embodiment shown in FIG. 10, an example in which M=3 and N=4 is used to describe the optical module provided in this embodiment of this application.

As shown in FIG. 10, the optical module 1000 includes an optical receiving unit 1110 (where reference may be made to the optical receiving unit 711 in FIG. 7), an optical sending unit 1120 (where reference may be made to the optical sending unit 712 in FIG. 7), an optical receiving unit 1130 (where reference may be made to the optical receiving unit 913 in FIG. 9), an optical sending unit 1140 (where reference may be made to the optical sending unit 914 in FIG. 9), a demultiplexing unit 1150, and an optical fiber connector 1200. The optical fiber connector 1200 includes a ferrule 1210, and an optical fiber 1 (where reference may be made to the optical fiber 1 in FIG. 7), an optical fiber 2 (where reference may be made to the optical fiber 2 in FIG. 7), and an optical fiber 5 (namely, a sixth optical fiber) are built in the ferrule 1210. The demultiplexing unit 1150 corresponds to the demultiplexing unit 612 in FIG. 6, the optical fiber connector 1200 corresponds to the optical fiber connector 920 in FIG. 6, the ferrule 1210 corresponds to the ferrule 621 in FIG. 6, and the optical fiber 5 corresponds to the optical fiber 3 in FIG. 6.

For functions of the optical receiving unit 1110, the optical sending unit 1120, the optical receiving unit 1130, the optical sending unit 1140, the optical fiber 1, and the optical fiber 2, refer to the descriptions in FIG. 7 and FIG. 9.

The optical fiber 5 is configured to transmit an optical signal 3 (namely, a third optical signal) received by the optical receiving unit 1130, and the optical fiber 5 is further configured to transmit an optical signal 4 received from the optical sending unit 1140. Wavelengths of any two of an optical signal 1 to the optical signal 4 are different.

The demultiplexing unit 1150 is configured to: select the optical signal 2 and send the optical signal 2 to the optical fiber 2, is configured to: select the optical signal 1 and send the optical signal 1 to the optical receiving unit 1110, is configured to: select the optical signal 4 and send the optical signal 4 to the optical fiber 5, and is configured to: select the optical signal 3 and send the optical signal 3 to the optical receiving unit 1130.

For example, the demultiplexing unit 1150 includes a filter 1151 (which is the same as the filter 9151 in FIG. 9), a filter 1152 (which is the same as the filter 9152 in FIG. 9), a filter 1153 (namely, a third filter), and a filter 1154 (namely, a fourth filter). The filter 1153 is configured to: reflect the optical signal 3 and transmit another optical signal. The reflector 1154 is configured to: transmit the optical signal 4 and reflect another optical signal. For a process in which the filter 1151 selects the optical signal 1 and sends the optical signal 1 to the optical receiving unit 1110, and a process in which the filter 1152 selects the optical signal 2 and sends the optical signal 2 to the optical fiber 2, refer to the foregoing descriptions in FIG. 9. When the filter 1154 receives the optical signal 3 from the optical fiber 5, the filter 1154 reflects the optical signal 3 to the filter 1153, and then the filter 1153 reflects the optical signal 3 to the optical receiving unit 1130. When the optical sending unit 1140 sends the optical signal 4, the optical signal 4 reaches the optical fiber 5 through the filter 1154.

In a possible implementation, the optical receiving unit 1110, the optical sending unit 1120, the optical sending unit 1130, the optical receiving unit 1140, and the demultiplexing unit 1150 are encapsulated in a transceiver component 1100.

It should be noted that, an example in which the demultiplexing unit 1150 includes the filter 1151, the filter 1152, the filter 1153, and the filter 1154 is merely used in FIG. 10. Embodiments of this application do not limit the demultiplexing unit 1150 to necessarily include the foregoing elements. Provided that the demultiplexing unit can select the optical signal 1 and send the optical signal 1 to the optical receiving unit 1110, can select the optical signal 2 and send the optical signal 2 to the optical fiber 2, can select the optical signal 3 and send the optical signal 3 to the optical receiving unit 1130, and can select the optical signal 4 and send the optical signal 4 to the optical fiber 5, the demultiplexing unit falls within the protection scope of embodiments of this application.

It should be further noted that, an example in which the four optical units included in the optical module 1000 include two optical receiving units and two optical sending units is used in FIG. 10. The four optical units included in the optical module 1000 may include more optical receiving units or include more optical sending units. This is not limited in embodiments of this application. It may be understood that when a function of the optical unit changes, a function of an optical fiber corresponding to the optical unit also changes, and a function of the demultiplexing unit also changes. For example, if the optical receiving unit 1110 included in the optical module 1000 is replaced with the optical sending unit 1110 configured to send the optical signal 1, the optical fiber 1 is configured to transmit the optical signal 1 sent by the optical sending unit 1110, and the demultiplexing unit 1150 selects the optical signal 1 and sends the optical signal 1 to the optical fiber 1.

It should be further noted that, an example in which wavelengths of any two of the optical signal 1 to the optical signal 4 are different is used in FIG. 10. Wavelengths of different optical signals in the optical signal 1 to the optical signal 4 may be the same.

An embodiment of this application further provides an optical fiber transmission system. The optical fiber transmission system includes a baseband unit, a radio frequency unit, and the optical module described in the foregoing embodiment. The baseband unit and the radio frequency unit communicate with each other by using the optical module.

For example, the optical module is deployed on the baseband unit.

The foregoing descriptions are merely specific implementations of this application, but are not intended to limit the protection scope of this application. Any variation or replacement readily figured out by a person skilled in the art within the technical scope disclosed in this application shall fall within the protection scope of this application. Therefore, the protection scope of this application should be subject to the protection scope of the claims.

## Claims

1. An optical module, comprising N optical units, a demultiplexing unit, and an optical fiber connector, wherein the optical fiber connector comprises a ferrule and M optical fibers, the M optical fibers are disposed in the ferrule, each of the M optical fibers corresponds to at least one of the N optical units, and optical units corresponding to any two of the M optical fibers are different, wherein M is an integer greater than or equal to 2, and N is an integer greater than or equal to M;
a first optical unit in the N optical units is configured to receive or send an optical signal, and the first optical unit is any one of the N optical units;
a first optical fiber in the M optical fibers is configured to transmit an optical signal received by an optical unit corresponding to the first optical fiber, and/or the first optical fiber is configured to transmit an optical signal received from the optical unit corresponding to the first optical fiber, wherein the first optical fiber is any one of the M optical fibers; and
the demultiplexing unit is configured to send, to the first optical unit, an optical signal received from an optical fiber corresponding to the first optical unit, and/or configured to send, to the first optical fiber, the optical signal received from the optical unit corresponding to the first optical fiber.

2. The optical module according to claim 1, wherein wavelengths of optical signals corresponding to any two of the N optical units are different.

3. The optical module according to claim 1 or 2, wherein a length of the first optical fiber is equal to a length of the ferrule.

4. The optical module according to claim 1 or 2, wherein a length of the first optical fiber is greater than a length of the ferrule.

5. The optical module according to any one of claims 1 to 4, wherein the N optical units comprise a first optical receiving unit and a first optical sending unit, and the M optical fibers comprise a second optical fiber and a third optical fiber;
the second optical fiber is configured to transmit a first optical signal received by the first optical receiving unit; and
the third optical fiber is configured to transmit a second optical signal received from the first optical sending unit.

6. The optical module according to claim 5, wherein the demultiplexing unit comprises a first filter and a second filter;
the first filter is configured to: reflect the first optical signal and transmit the second optical signal; and
the second filter is configured to reflect the second optical signal.

7. The optical module according to claim 5, wherein the N optical units further comprise a second optical receiving unit and a second optical sending unit, and the M optical fibers further comprise a fourth optical fiber and a fifth optical fiber;
the fourth optical fiber is configured to transmit a third optical signal received by the second optical receiving unit; and
the fifth optical fiber is configured to transmit a fourth optical signal received from the second optical sending unit.

8. The optical module according to claim 5, wherein the N optical units further comprise a second optical receiving unit and a second optical sending unit, and the M optical fibers further comprise a sixth optical fiber;
the sixth optical fiber is configured to transmit a fourth optical signal received from the second optical sending unit; and
the sixth optical fiber is further configured to transmit a third optical signal received by the second optical receiving unit.

9. The optical module according to claim 7 or 8, wherein the demultiplexing unit comprises a first filter, a second filter, a third filter, and a fourth filter;
the first filter is configured to: reflect the first optical signal and transmit another optical signal;
the second filter is configured to: reflect the second optical signal and transmit another optical signal;
the third filter is configured to: reflect the third optical signal and transmit another optical signal; and
the fourth filter is configured to: transmit the fourth optical signal and reflect another optical signal.

10. The optical module according to any one of claims 1 to 9, wherein the N optical fibers are arranged side by side in a same direction in the ferrule.

11. The optical module according to any one of claims 1 to 9, wherein the N optical fibers are arranged around a longitudinal axis of the ferrule.

12. The optical module according to any one of claims 1 to 11, wherein the N optical fibers comprise one or more multi-core optical fibers.

13. A ferrule, wherein M optical fibers are built in the ferrule, and each of the M optical fibers is configured to transmit an optical signal with at least one wavelength, wherein M is an integer greater than or equal to 2.

14. The ferrule according to claim 13, wherein wavelengths of optical signals transmitted by any two of the M optical fibers are different.

15. The ferrule according to claim 13 or 14, wherein the M optical fibers comprise a second optical fiber and a third optical fiber;
the second optical fiber is configured to transmit a first optical signal received by a first optical receiving unit; and
the third optical fiber is configured to transmit a second optical signal received from a first optical sending unit.

16. The ferrule according to claim 15, wherein the M optical fibers further comprise a sixth optical fiber;
the sixth optical fiber is configured to transmit a fourth optical signal received from a second optical sending unit; and
the sixth optical fiber is further configured to transmit a third optical signal received by a second optical receiving unit.

17. An optical fiber connector, wherein the ferrule according to any one of claims 13 to 16 is built in the optical fiber connector.

18. An optical fiber transmission system, comprising a radio frequency unit, a baseband unit, and the optical module according to any one of claims 1 to 12, wherein the radio frequency unit communicates with the baseband unit by using the optical module.

19. The optical fiber transmission system according to claim 18, wherein the optical module is deployed on the baseband unit.
